(19) Europäisches Patentamt
European Patent Office
Office européen des brevets

(11) **EP 3 988 800 B1**

(12) **EUROPEAN PATENT SPECIFICATION**

(45) Date of publication and mention
of the grant of the patent:
**07.08.2024  Bulletin 2024/32**

(21) Application number: **19933808.8**

(22) Date of filing: **20.06.2019**

(51) International Patent Classification (IPC):
**F04D 29/28** *(2006.01)*      **F04D 29/30** *(2006.01)*
**F04D 29/66** *(2006.01)*      **H02K 9/06** *(2006.01)*
**F04D 29/32** *(2006.01)*

(52) Cooperative Patent Classification (CPC):
**F04D 29/30; F04D 29/282; F04D 29/666;
H02K 9/06;** F04D 29/328; F05D 2240/301;
F05D 2240/304

(86) International application number:
**PCT/JP2019/024510**

(87) International publication number:
**WO 2020/255334 (24.12.2020 Gazette 2020/52)**

(54) **CENTRIFUGAL FAN AND ROTARY ELECTRIC MACHINE**

ZENTRIFUGALGEBLÄSE UND ROTIERENDE ELEKTRISCHE MASCHINE

VENTILATEUR CENTRIFUGE ET MACHINE ÉLECTRIQUE TOURNANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.04.2022  Bulletin 2022/17**

(73) Proprietor: **MITSUBISHI ELECTRIC
CORPORATION
Chiyoda-ku
Tokyo 100-8310 (JP)**

(72) Inventors:
• **TAKEISHI, Keisuke**
**Tokyo 100-8310 (JP)**
• **MINAMI, Shinichiro**
**Tokyo 100-8310 (JP)**
• **INOUE, Shingo**
**Tokyo 100-8310 (JP)**

(74) Representative: **Hoffmann Eitle
Patent- und Rechtsanwälte PartmbB
Arabellastraße 30
81925 München (DE)**

(56) References cited:
DE-A1- 102017 103 984      FR-A1- 2 811 156
FR-A1- 2 850 805      JP-A- 2002 186 215
JP-A- 2008 064 044      JP-A- 2011 052 547
JP-A- 2012 127 217      US-A- 5 028 826
US-A1- 2014 127 029      US-A1- 2015 303 765
US-A1- 2017 146 031      US-A1- 2018 252 237

EP 3 988 800 B1

**Description**

TECHNICAL FIELD

The present disclosure relates to a centrifugal fan and a rotary electric machine.

BACKGROUND ART

A centrifugal fan sucks a fluid by a rotary bladed wheel in the rotation-axis direction and discharges the fluid in the rotation-radius direction, and is used for carrying a gas such as air.

For example, Patent Document 1 discloses a centrifugal fan having a plurality of blades arranged in the circumferential direction, a disk-shaped or bowl-shaped hub provided at one end in the axial direction of the blades, and an annular shroud provided at the other end in the axial direction of the blades. Further, in Patent Document 1, auxiliary blades are provided to the annular shroud, and the shapes or the intervals of the blades or the auxiliary blades are changed, thereby achieving improvement in flow-amount performance and noise reduction.

CITATION LIST

PATENT DOCUMENT

Patent Document 1: Japanese Laid-Open Patent Publication No. 2006-77631

FR 2 850 805 A1 discloses features falling under the preamble of claim 1. US 5 028 826 A, US 2018/252237 A1, US 2015/303765 A1 and US 2014/127029 A1 are further prior art.

SUMMARY OF THE INVENTION

PROBLEMS TO BE SOLVED BY THE INVENTION

Patent Document 1 discloses that the blades and the auxiliary blades are arranged at random intervals or the numbers of the blades and the auxiliary blades are changed, thereby modulating frequencies of noise generated by the centrifugal fan, to reduce noise having specific frequencies. However, in a centrifugal fan having such a conventional structure, for example, where the number of blades is denoted by Z, if the number of blades Z is changed to modulate frequencies generated from the centrifugal fan, large-noise-value components modulated to a frequency band lower than the number of blades Z and large-noise-value components modulated to a frequency band higher than the number of blades Z are generated simultaneously, thus causing a problem of bringing an uncomfortable feeling. This is due to nz noise represented by frequencies of $n \times Z$, where n is the rotation speed, and large-noise-value components modulated to frequencies of $Z - 1, Z - 2, ...$ lower than the blade number Z and large-noise-value components modulated to frequencies of $Z + 1, Z + 2, ...$ higher than the blade number Z are generated simultaneously. In particular, in a case of applying a centrifugal fan for cooling an on-vehicle rotary electric machine, noise in a low frequency band does not stand out because of masking by engine sound, while there is a problem of bringing a significantly uncomfortable feeling when noise values in a high-frequency band are great.

The present disclosure has been made to solve the above conventional problem, and an object of the present disclosure is to reduce noise values in a high-frequency band without reducing the flow amount in a centrifugal fan having a plurality of blades arranged at unequal intervals.

SOLUTION TO THE PROBLEMS

The invention is defined by claim 1. Preferred embodiments are defined in claims 2-13.

EFFECT OF THE INVENTION

The centrifugal fan according to the present disclosure makes it possible to reduce noise values in a high-frequency band without reducing the flow amount.

BRIEF DESCRIPTION OF THE DRAWINGS

[FIG. 1] FIG. 1 schematically shows the structure of a centrifugal fan according to embodiment 1.

[FIG. 2] FIG. 2 is an enlarged view of a part of the centrifugal fan according to embodiment 1.

[FIG. 3] FIG. 3 is a sectional view along X-X' direction in FIG. 2.

[FIG. 4] FIG. 4 is an enlarged view of another part of the centrifugal fan according to embodiment 1 and it illustrates the characterizing portion of claim 1.

[FIG. 5] FIG. 5 is an enlarged view of a part of another centrifugal fan according to embodiment 1.

[FIG. 6] FIG. 6 is a graph showing nz noise generated from the centrifugal fan.

[FIG. 7] FIG. 7 shows an nz noise reducing effect of a centrifugal fan according to embodiment 5.

[FIG. 8] FIG. 8 is a partial sectional view schematically showing a vehicle AC electric generator according to embodiment 9.

[FIG. 9] FIG. 9 shows a partial structure of a centrifugal fan and a rotor of the vehicle AC electric generator according to embodiment 9.

DESCRIPTION OF EMBODIMENTS

Hereinafter, embodiments will be described with reference to the drawings. In the drawings, the same reference characters denote the same or corresponding parts. In the following embodiments, air is used as an example of a fluid. However, without limitation thereto, another gas may be used. Only embodiments which are according to claim 1 are embodiments according to the invention. At least embodiment 1 is such an embodiment.

Embodiment 1

Hereinafter, a centrifugal fan according to embodiment 1 will be described with reference to the drawings.

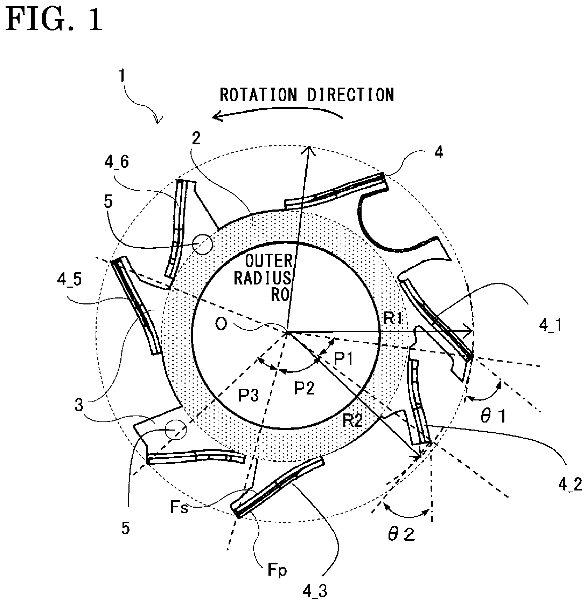

FIG. 1 shows the schematic structure of the centrifugal fan according to embodiment 1. In FIG. 1, a centrifugal fan 1 includes an annular main plate 2, a plurality of arm-shaped plates 3 formed to extend on the same plane as the main plate 2 from the outer circumference of the main plate 2, and blades 4 standing on edges of the respective arm-shaped plates 3 (the blades are denoted by reference characters 4_1, 4_2, ... as described later).

The main plate 2 has a rotation center in the vicinity of the central part thereof, and a rotation axis is set so as to pass the rotation center and to be perpendicular to the main surface of the main plate 2. The main plate 2 is attached to a rotary body, e.g., a rotor of a rotary electric machine. As shown in FIG. 1, the main plate 2 has, at the center part, a hole through which, for example, a shaft (see later-described embodiment 9) corresponding to the rotation axis of the rotary electric machine is inserted. The main plate 2 may have such a shape that the center part thereof bulges in a bowl shape in the axial direction in which the blades 4 are formed. A rib or a protrusion for reinforcement may be provided to a part of the main plate 2. In a case of being attached to the rotary electric machine, the main plate 2 may have a cutout for positioning with the rotor.

Each arm-shaped plate 3 is formed to extend outward from a part of the outer circumference of the main plate 2, and is present on the same plane as the main plate 2. The arm-shaped plate 3 may be provided with a strength-reinforcement rib or the like. An outer circumferential part (indicated by a solid line in the drawing) of the main plate 2 may be present between two adjacent arm-shaped plates 3, or adjacent arm-shaped plates 3 may be connected to each other so that an outer circumferential part of the main plate 2 is not present therebetween (the outer circumferential part position of the main plate 2 is indicated by a broken line in the drawing).

Each blade 4 has a shape that stands approximately orthogonally in the rotation-axis direction from the outer circumferential end of the arm-shaped plate 3, and is a part approximately parallel to the rotation axis. The blade 4 may not necessarily be formed orthogonally to the main plate 2, and may be formed to have a certain angle with respect to the main plate 2.

A cooling hole 5 may be provided in the main plate 2 or the arm-shaped plate 3 extending from the main plate 2. The shape of the cooling hole 5 may be a round shape, an elliptic shape, or a substantially polygonal shape, and a plurality of cooling holes 5 may be provided. In a case of providing a plurality of cooling holes 5, the shapes of the cooling holes 5 may be different from each other. The cooling hole 5 provided in the main plate 2 or the arm-shaped plate 3 extending from the main plate 2 may be rounded or chamfered at a hole end part on the blade 4 side so as to reduce the flow-passage resistance for a flow sucked into the rotor.

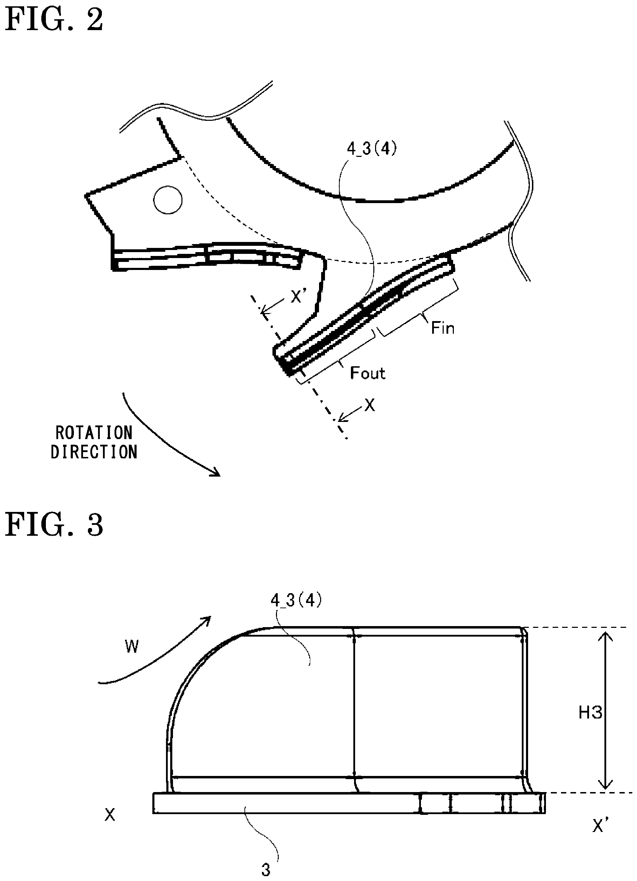

With the above structure, the centrifugal fan operates such that, when the main plate 2 rotates, wind to be discharged outward along the blades 4 is generated and air flowing into the central part of the main plate 2 is discharged to the outer circumferential side. As shown at a blade 4_3 part in FIG. 1, the outer side of the blade 4 is a positive-pressure surface Fp at which an air flow is discharged, and the inner side (rotation-center side) of the blade 4 is a negative-pressure surface Fs. FIG. 2 shows an enlarged view of the blade 4_3 part in FIG. 1, and FIG. 3 shows a sectional view along X-X' direction in FIG. 2. The axial-direction height of the blade 4 is small at a forward edge (X side) in the rotation direction and is great at a backward edge (X' side), thus making such a shape that relaxes collision of wind W at the forward edge.

The rotation-center side of the blade 4 is the forward side in the rotation direction, and the outer circumferential side of the blade 4 is the backward side in the rotation direction. Such blades 4 are generally called backward blades, and form a centrifugal fan also called turbofan that sucks air from the axial direction and blows out the air around the entire circumference. At least two adjacent blades 4 do not have a flat surface, but have such a curved surface that, as seen from the outer side in FIG. 2, an inner-circumferential-side surface Fin (first part) is concave and an outer-circumferential-side surface Fout (second part) is convex, and these surfaces are preferably smoothly connected to each other.

Further, the blades 4 are formed at unequal intervals in the rotation direction. The unequal intervals are defined such that, as seen in the rotation-axis direction, an angle P formed by the outer circumferential ends of the adjacent blades with respect to the rotation center is not the same among the blades. In embodiment 1, as a typical configuration, the angles P formed by all the pairs of adjacent blades with respect to the rotation center are different from each other. Such an arrangement that the intervals between the adjacent blades are unequal intervals is included at least partially. An arrangement in which the angle P is the same between different pairs of blades among multiple blades may be included partially, but it is desirable that a larger number of different angles P than half the number of the blades are included.

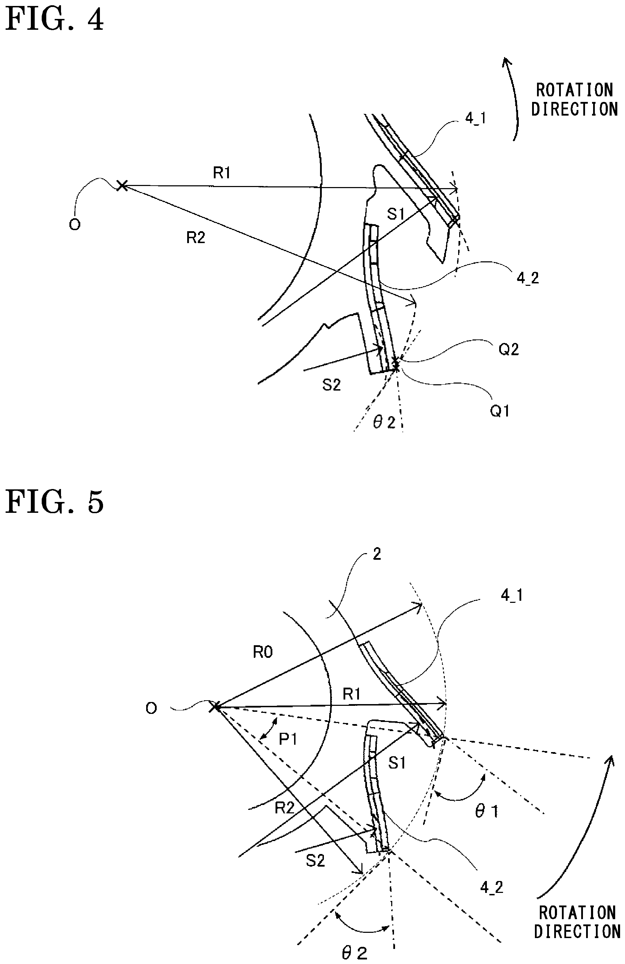

Here, parameters specifying the shapes of the blades 4 will be described with reference to FIGS. 1, 3, 4, and 5. FIGS. 4 and 5 show enlarged views around blades 4_1 and 4_2.

As shown in FIG. 1, the number of the blades of the centrifugal fan 1 is denoted by Z, the smallest one of angles formed by the outermost circumferential ends of two adjacent blades with respect to the rotation center O as seen in the rotation-axis direction is defined as an angle P1, and angles between two blades sequentially adjacent in the opposite-rotation direction from the angle P1 are defined as P2, ..., PZ. Then, the blades sequentially arranged in the opposite-rotation direction from the rotation-direction forward side of P1 are denoted by 4_1, 4_2, ..., 4_Z. In addition, the blade outer radii in a cross-section perpendicular to the rotation axis at the respective blades 4_1, 4_2, ..., 4_Z are denoted by R1, R2, ..., RZ. Further, in a cross-section perpendicular to the rotation axis, a tangent line to a circle centered on the rotation center O, at the outer circumferential end of each blade, i.e., a tangent line to each of circles respectively having radii of R1, R2, ..., RZ, at the blade outer circumferential end, is extended from the outer circumferential end toward the backward side in the rotation direction. Using this extended tangent line as a reference, an angle formed by a tangent line extended from the outer circumferential end along the inclination of each blade in the vicinity of the outer circumferential end is defined as exit angles $\Theta 1$, $\Theta 2$, ..., $\theta Z$. As shown in FIG. 4, since the outer circumferential side of the blade has a curved surface, two points (Q1, Q2) may be chosen from a short range in the vicinity of the end, e.g., approximately 2 mm to 3 mm from the end, and then an extended line of a line connecting the two points may be used as the above extended inclination tangent line, to calculate the exit angles $\Theta 1$, $\Theta 2$, ..., $\theta Z$.

As shown in FIG. 3, a length of the blade 4 to a point most distant from the main plate 2 in the rotation-axis direction is defined as a height H of the blade 4, and the heights of the blade 4_1, 4_2, ..., 4_Z are respectively denoted by H1, H2, ..., HZ.

In a cross-section perpendicular to the rotation axis, a warp radius on the outer circumferential side of each blade 4 is denoted by S, and the warp radii of the respective blades 4_1, 4_2, ..., 4_Z are denoted by S1, S2, ..., SZ. As described above, in the present embodiment, the inner circumferential side of the blade is concave and the outer circumferential side of the blade is convex with respect to the rotation direction, and the inner circumferential side and the outer circumferential side are smoothly connected to each other. As shown in FIG. 4, the warp radius S is the warp radius on the outer circumferential side of each blade.

In the present embodiment, the warp radius S2 of the blade 4_2 positioned on the backward side in the rotation direction, of the pair of two blades adjacent to each other with the smallest interval in the rotation direction, is smaller than the warp radii of all the other blades. That is, the blade 4_2 is set to satisfy S2 < (smallest one of S1, S3, ..., SZ). Here, the two blades adjacent to each other with the smallest interval are the pair of blades forming the angle P1 which is the smallest one of the angles P formed by the outermost circumferential ends of two blades with respect to the rotation center O.

The warp radius S2 of the blade 4_2 positioned on the backward side in the rotation direction, of the pair of two blades adjacent to each other with the smallest interval in the rotation direction, may be set to be smaller than at least the warp radius S1 of the blade 4_1 positioned on the forward side in the rotation direction.

As described above, if the warp radius S2 of the blade 4_2 is set to be smaller than the warp radii of all the other blades or the warp radius S1 of the blade 4_1, an action of blowing out a flow in the centrifugal direction from the blade 4_2 becomes smaller as compared to the other blades, so that sharp change in the flow rate occurring between the forward and backward sides of the blade 4_2 is suppressed. As the interval between the blades becomes narrower, higher-frequency noise is likely to occur. Since the interval between the blade 4_1 and the blade 4_2 is narrowest, reducing the warp radius S2 of the blade 4_2 is most effective for reducing high-frequency nz noise.

Here, nz noise will be described. The nz noise is noise having discrete frequencies generated from the centrifugal fan and depending on the rotation speed, and is described by a frequency of $n \times Z$, where n is the rotation speed and Z is the number of blades. For example, in a case where a fan having six blades (Z = 6) arranged at equal intervals (equal pitch) is rotated at a rotation speed of 6000 rpm (frequency: 100 Hz), nz noise of 600 Hz occurs. In a case where the rotation speed is 1.5 times, i.e., 9000 rpm (frequency: 150 Hz), nz noise having a frequency of 1.5 times, i.e., 900 Hz occurs.

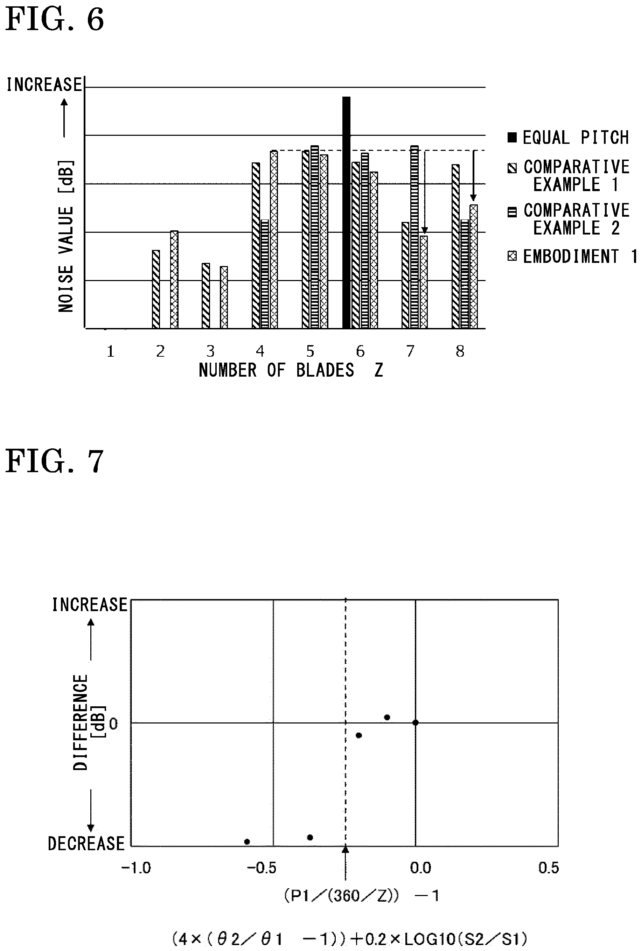

FIG. 6 is a graph showing the nz noise generated from the centrifugal fan. The horizontal axis indicates the frequency of the nz noise, which is, for convenience sake, represented by the number of blades Z (Z = 1, 2, 3, ...) with the rotation speed fixed. The vertical axis indicates the noise value [dB]. In FIG. 6, a case of equal pitch is a case of six blades (Z = 6), and nz noise occurs at Z = 6. Comparative examples 1 and 2 are examples in which a centrifugal fan having the same number of blades as in the case of equal pitch, i.e., six blades (Z = 6) arranged at unequal intervals, is rotated at the same rotation speed as in the case of equal pitch. Comparative examples 1 and 2 are different in the blade intervals. When the blades are arranged at unequal intervals as in Comparative examples 1 and 2, nz noise at Z = 6 is reduced, but nz noise increases in the vicinity of Z = 6, such as Z = 5 or Z = 7. High-frequency components (high-frequency band) higher than Z = 6 arise at blades having narrow intervals. In this regard, as in embodiment 1, the warp radius of the blade positioned on the backward side, of the two blades 4_1 and 4_2 having the smallest interval, is set to be smaller than the warp radius of the forward-side blade so that sharp change in the flow rate is suppressed. Thus, separation occurring at the negative-pressure surfaces of the blade 4_1 and the blade 4_2 is inhibited and reduction in the flow amount of the centrifugal fan is suppressed, while high-frequency components of nz noise higher than the number of blades of the centrifugal fan can be reduced.

A centrifugal fan obtained by modifying the centrifugal fan having unequal intervals in Comparative example 1 such that the warp radius of the blade positioned on the backward side, of the two blades having the smallest interval, is set to be smaller than the warp radius of the forward-side blade, is defined as the centrifugal fan of embodiment 1, and the nz noise thereof is shown in FIG. 6. Regarding the nz noise of the centrifugal fan according to embodiment 1, the noise values at Z = 7 and Z = 8 on the higher-frequency side than at Z = 6 are smaller than the noise value at Z = 4 which indicates the greatest noise value on the lower-frequency side than at Z = 6, as shown by a broken line and arrows. In addition, it is found that the noise values at Z = 7 and Z = 8 in embodiment 1 are respectively smaller than the noise values at Z = 7 and Z = 8 in Comparative example 1, the noise value at Z = 7 in embodiment 1 is sufficiently smaller than the noise value at Z = 7 in Comparative example 2, and the noise value at Z = 8 in embodiment 1 is reduced to a level similar to the noise value at Z = 8 in Comparative example 2. That is, in the centrifugal fan according to embodiment 1, the noise values on the higher-frequency side than at Z = 6 are reduced in total as compared to Comparative examples 1 and 2.

As described above, in the centrifugal fan having blades with unequal intervals, high-frequency components arise from the blades at a narrow-interval part. Therefore, the blade positioned on the backward side, of the two blades having the smallest interval, is designed to have such a shape as to suppress sharp change in the flow rate. In embodiment 1, this shape is made such that the warp radius of the blade positioned on the backward side, of the two blades having the smallest interval, is smaller than at least the warp radius of the forward-side blade. Here, the shape of the backward-side blade for suppressing sharp change in the flow rate refers to such a shape that the blade action of discharging air to the outer circumferential side becomes smaller as compared to the forward-side blade. It is noted that, depending on the parameters for changing the shape, the flow amount of the centrifugal fan might be reduced if the action is excessively reduced.

In the present embodiment, the warp radius S2 on the outer circumferential side of the blade positioned on the backward side in the rotation direction, of the two blades having the smallest intervals, is desirably set to be not greater than half the warp radius S1 on the outer circumferential side of the blade positioned on the forward side, and more desirably set to be not greater than 1/3 thereof. By setting the warp radius S2 to be not greater than 1/2 or 1/3 of the warp radius S1, high-frequency components of noise are further reduced.

In addition to the relationship between the warp radii of the two blades having the smallest interval, the warp radius on the outer circumferential side of the blade positioned on the backward side in the rotation direction, of the two blades having the second or third smallest interval may be set to be smaller than the warp radius on the outer circumferential side of the blade positioned on the forward side. In the present embodiment, the blades 4_5 and 4_6 in FIG. 1, which are a pair of two blades at a position approximately opposite to the midpoint between the pair of the blades having the narrowest interval, are a pair of blades having the second or third smallest interval. Such a pair of blades may also be designed to satisfy a similar warp-radius relationship as described above, i.e., S6 < S5, S6 < S5×1/2, or S6 < S5×1/3, whereby the effect of reducing high-frequency components can be further improved.

FIGS. 1 and 4 have shown the example in which the outer radii R1 and R2 of the two blades adjacent to each other with the smallest interval, i.e., the blades 4_1 and 4_2 forming the angle P1, are set to satisfy R1 > R2. However, in the present embodiment, as long as the above warp-radius relationship S2 < S1 is satisfied, as shown in FIG. 5, the outer radii R1 and R2 of the blades 4_1 and 4_2 may be equal to each other (R1 = R2), or may be equal to R0 which is the greatest outer radius (R1 = R2 = R0). Also, the outer radii of the other blades may be all equal to R0. An effect obtained when the outer radii R1 and R2 of the two blades adjacent to each other with the smallest interval, i.e., the blades 4_1 and 4_2 forming the angle P1, are set to satisfy R1 > R2, will be described later in embodiment 3.

As described above, according to the present embodiment, in the centrifugal fan, the blades are arranged at unequal intervals, and the warp radius S2 on the outer circumferential side of the blade positioned on the backward side in the rotation direction, of the two blades having the smallest interval, is set to be smaller than the warp radius S1 on the outer circumferential side of the blade positioned on the forward side. Thus, the same flow amount as that of a centrifugal fan having the same number of blades with equal intervals can be achieved, and high-frequency components of noise are reduced as compared to a conventional centrifugal fan having an unequal-interval configuration. Accordingly, the effect of A-weighted correction increases and the A-weighted sound pressure level of noise generated from the centrifugal fan can be greatly reduced.

According to the characterising portion of claim 1, in the pair of blades 4_1, 4_2 adjacent to each other with the smallest interval in the rotation direction among the plurality of blades 4, for each blade of the pair of blades, the inner-circumferential-side surface is concave and the outer-circumferential-side surface is convex, and these surfaces are preferably smoothly connected to each other to form a curved surface; and the warp radius on the outer circumferential side of the blade positioned on the backward side in the rotation direction, of the two blades having the smallest interval, is smaller than the warp radius on the outer circumferential side of the blade positioned on the forward side. The other blades 4 may have such shapes that, partially or in all, incline at appropriate angles with respect to the rotation axis, and the shapes of the blades 4 may be straight shapes, arc shapes, or 5 shapes as seen in the axial direction. Further, the blade shapes of the blades 4 may be the same or may be a combination of a plurality of blade shapes.

Since the blades are arranged at unequal intervals, the positions of the arm-shaped plates 3 may also be arranged at unequal intervals in the rotation direction, and two adjacent arm-shaped plates 3 may be formed in such a shape that the ring-shaped part of the main plate 2 is not exposed therebetween, i.e., the base parts of the two arm-shaped plates 3 connecting to the main plate 2 may be partially connected to each other.

The blade 4 is provided at the outer circumferential end of the arm-shaped plate 3 extending in the radial direction. Therefore, it is also possible to form the arm-shaped plates 3 and the blades 4 continuously from the main plate 2 through plate bending work by making a cut in the main plate 2 and bending parts thereof to stand up. However, each blade 4 need not be provided at the outer circumferential end of the arm-shaped plate 3 extending in the radial direction, and may be formed within the arm-shaped plate 3.

The cooling holes 5 may be provided in all the arm-shaped plates 3, or the cooling hole 5 may be provided in only one of them. Besides formation of the cooling hole 5, a part in the radial direction of the arm-shaped plate 3 may be thinned so as to increase air flowing in the axial direction. For example, the arm-shaped plate 3 in which the cooling hole 5 is not provided may be provided with a cutout at a rotation forward or backward edge in the radial direction, whereby air flowing in the axial direction can be increased. Desirably, the centrifugal fan 1 is arranged so that air passes through the cooling hole 5 and then readily flows in the direction opposite to the inclination direction of the blade 4. The air having passed through the cooling hole 5 moves toward the rotation-axis direction of the centrifugal fan while partially flowing in the centrifugal direction as the main plate 2 rotates. In addition, providing the cooling holes 5 in the main plate 2 and the arm-shaped plates 3 can reduce the weight. Further, by providing more cooling holes 5 at a part where the arm-shaped plates 3 are provided densely as described above, the center of gravity of the centrifugal fan 1 can be made close to the rotation center, whereby imbalance can be corrected.

An annular shroud may be provided at ends of the blades 4 on the side opposite to the main plate 2.

Embodiment 2

Hereinafter, a centrifugal fan according to embodiment 2 will be described.

In the above embodiment 1, considering the fact that high-frequency components are generated by blades having a narrow interval in a centrifugal fan having blades with unequal intervals, the warp radius on the outer circumferential side of the blade positioned on the backward side, of the two blades having the smallest interval, is set to be smaller than the warp radius on the outer circumferential side of the forward-side blade, thereby suppressing sharp change in the flow rate at the blade positioned on the backward side. In embodiment 2, an example in which the exit angle $\Theta2$ of the blade 4_2 positioned on the backward side shown in FIGS. 1, 4, and 5 is adjusted, will be described.

The exit angle $\Theta2$ of the blade 4_2 positioned on the backward side, of the two blades having the smallest interval, is set to be smaller than the exit angles of all the other blades. That is, the following expression is satisfied.

$\Theta2 <$ (smallest one of $\Theta1, \Theta3, ..., \Theta Z$)

By making the exit angle small as described above, disturbance of air separating from the outer periphery of the blade 4 is reduced. Thus, an effect of reducing high-frequency components of noise is provided as in embodiment 1.

It is noted that the exit angle $\Theta2$ of the blade 4_2 positioned on the backward side in the rotation direction, of the two blades having the smallest interval, may be set to be smaller than at least the exit angle $\theta1$ of the blade 4_1 positioned on the forward side, and therefore the exit angles may be set to satisfy $0 < \Theta2 < \Theta1$. As a result, sharp change in the flow rate on the outer circumferential side of the blade 4_2 can be suppressed, whereby high-frequency components of noise can be reduced. However, if θ is extremely small, an effect of the blade discharging air to the outer circumferential side is reduced, so that air blow performance might be reduced. Therefore, Θ2 may be an angle in a range of 20° to 70° and smaller than 81 by about 5° to 15°.

As described above, according to embodiment 2, in the centrifugal fan, the blades are arranged at unequal intervals, and the exit angle Θ2 of the blade positioned on the backward side in the rotation direction, of the two blades having the smallest interval, is set to be smaller than at least the exit angle of the blade positioned on the forward side. Thus, high-frequency components of noise are reduced as compared to a conventional centrifugal fan having an unequal-interval configuration.

Embodiment 3

Hereinafter, a centrifugal fan according to embodiment 3 will be described.
In embodiment 3, considering the fact that high-frequency components are generated by blades having a narrow interval in a centrifugal fan having blades with unequal intervals, an example in which the outer radius R2 of the blade 4_2 positioned on the backward side, of the two blades having the smallest interval, is adjusted will be described.
The blade outer radius R2 of the blade 4_2 positioned on the backward side, of the two blades having the smallest interval, is set to be smaller than the blade outer radii of all the other blades. That is, the following expression is satisfied.

R2 < (smallest one of R1, R3, ..., RZ)

By this setting, a phenomenon in which disturbance occurring at the blade 4_1 positioned just on the forward side in the rotation direction is disturbed again by the backward-side blade 4_2, is suppressed. As a result, sharp change in the flow rate on the outer circumferential side of the blade 4_2 can be suppressed and thus high-frequency components of noise can be reduced.
However, if R2 is extremely small as compared to the other outer radii, the effect of the blade discharging air to the outer circumferential side is reduced, so that air blow performance might be reduced. Therefore, the outer radius R2 of the blade positioned on the backward side in the rotation direction, of the two blades having the smallest interval, as shown in FIGS. 1 and 4, is desirably set to 90 to 99% of the outer radius R1 of the blade positioned on the forward side, and more desirably set to 95 to 98% thereof.
As described above, according to embodiment 3, in the centrifugal fan, the blades are arranged at unequal intervals, and the outer radius R2 of the blade positioned on the backward side in the rotation direction, of the two blades having the smallest interval, is set to be smaller than at least the outer radius R1 of the blade positioned on the forward side. Thus, high-frequency components of noise are reduced as compared to a conventional centrifugal fan having an unequal-interval configuration.

Embodiment 4

Hereinafter, a centrifugal fan according to embodiment 4 will be described.
In embodiment 4, considering the fact that high-frequency components are generated by blades having a narrow interval in a centrifugal fan having blades with unequal intervals, an example in which the height H2 of the blade 4_2 positioned on the backward side, of the two blades having the smallest interval, is adjusted will be described.
The blade height H2 of the blade 4_2 positioned on the backward side, of the two blades having the smallest interval, is set to be smaller than the blade heights of all the other blades, that is, H2 < (smallest one of H1, H3, ..., HZ) is satisfied. Thus, an area of the blade 4_2 where a great-disturbance flow arising on the negative pressure surface side of the blade 4_1 collides is reduced and the noise source is reduced, whereby high-frequency components of noise can be reduced.
However, if H2 is extremely small as compared to the other heights, the effect of the blade discharging air to the outer circumferential side is reduced, so that air blow performance might be reduced. Therefore, the height H2 of the blade 4_2 positioned on the backward side in the rotation direction, of the two blades having the smallest interval, is desirably set to be smaller than at least the height H1 of the blade 4_1 positioned on the forward side, i.e., set to 90 to 99% of the height H1, and more desirably set to 95 to 98% thereof.
As described above, according to embodiment 4, in the centrifugal fan, the blades are arranged at unequal intervals, and the height H2 of the blade positioned on the backward side in the rotation direction, of the two blades having the smallest interval, is set to be smaller than at least the height H1 of the blade positioned on the forward side. Thus, high-frequency components of noise are reduced as compared to a conventional centrifugal fan having an unequal-interval configuration.

Embodiment 5

Hereinafter, a centrifugal fan according to embodiment 5 will be described.

In embodiment 5, considering the fact that high-frequency components are generated by blades having a narrow interval in a centrifugal fan having blades with unequal intervals, the outer-circumferential-side shapes of the two blades having the smallest interval are prescribed by the following Expression (1).

$$(4 \times (\theta 2/\theta 1 - 1)) + 0.2 \times LOG10(S2/S1)$$

$$< (P1/(360°/Z) - 1) \quad \ldots (1)$$

FIG. 7 shows the nz noise reducing effect of the centrifugal fan according to embodiment 5. The horizontal axis indicates the left-hand side of the above Expression (1), and the vertical axis indicates a difference obtained by subtracting the sum of logarithms of low-frequency components of nz noise from the sum of logarithms of high-frequency components of nz noise. This graph is plotted from an experiment result about the outer-circumferential-side shapes of the two blades having the smallest interval. A position indicated by an arrow in FIG. 7 corresponds to the right-hand side of the above Expression (1). It is found that, in a region leftward from the arrow on the horizontal axis, the difference obtained by subtracting the sum of logarithms of low-frequency components of nz noise from the sum of logarithms of high-frequency components of nz noise, becomes small, i.e., the high-frequency components are reduced. In other words, it becomes possible to reduce high-frequency components of nz noise by satisfying the above Expression (1).

By setting the angle P1 formed by the two blades having the smallest interval, the exit angles $\Theta 1$, $\Theta 2$ thereof, and the warp radii S1, S2 thereof so as to satisfy the above Expression (1), it becomes possible to effectively suppress sharp change in the flow rate occurring between the forward and backward sides of the blade 4_2. Thus, while the flow amount of the centrifugal fan 1 is maintained without being reduced, high-frequency components of noise can be further reduced.

In embodiment 5, the outer-circumferential-side shapes of the two blades having the smallest interval are prescribed by Expression (1). Further, it is desirable that the outer-circumferential-side shape of the blade 4_2 positioned on the backward side, of the two blades having the smallest interval, satisfies a relationship similar to the above Expression (1), also for the other blades, as well as the prescription by Expression (1) for the blade 4_1 positioned on the forward side. That is, it is desirable to satisfy the following Expression (2).

$$(4 \times (\theta 2/\theta m - 1)) + 0.2 \times LOG10(S2/Sm)$$

$$< (Pm/(360°/Z) - 1) \quad \ldots (2)$$

Here, m is 1, 3, ..., Z.

For example,
$\Theta m = \Theta 1$, Sm = S1, and Pm = P1, if m = 1,
$\Theta m = \Theta 3$, Sm = S3, and Pm = P3, if m = 3, and
$\Theta m = \Theta Z$, Sm = SZ, and Pm = PZ, if m = Z.

Embodiment 6

Hereinafter, a centrifugal fan according to embodiment 6 will be described.

In the above embodiments 1 to 5, considering the fact that high-frequency components are generated by blades having a narrow interval in a centrifugal fan having blades with unequal intervals, the outer-circumferential-side shape of, in particular, the backward-side blade 4_2 of the two blades having the smallest interval has been prescribed. In embodiment 6, for such blades that the circumferential-direction interval therebetween is smaller than the average value of the blade intervals, i.e., the angle formed by a blade 4 N and a blade 4_(N + 1) with respect to the rotation center O satisfies PN < (360°/Z), the following Expression (3) may be satisfied.

$$(4 \times (\theta(N + 1)/\theta N - 1))$$

$$+ 0.2 \times LOG10(S(N + 1)/SN)$$

$$< (PN/(360° /Z) - 1) \quad ... \quad (3)$$

Here, N is 1, 2, 3, ..., Z, and a natural number that returns to 1 when exceeding Z.

For example,

if N = 1,
θN = Θ1, SN = S1, PN = P1, Θ(N + 1) = Θ2, and S(N + 1) = S2,
if N = 2,
θN = Θ2, SN = S2, PN = P2, θ(N + 1) = θ3, and S(N + 1) = S3, and
if N = Z,
θN = θZ, SN = SZ, PN = PZ, θ(N + 1) = θ1, and S(N + 1) = S1.

Making the setting so as to satisfy the above Expression (3) provides an effect of, while suppressing reduction in the flow amount of the centrifugal fan, effectively reducing high-frequency components of nz noise higher than the number of blades of the centrifugal fan. For such blades that the circumferential-direction interval therebetween is smaller than the average value of the blade intervals, it becomes possible to further effectively suppress sharp change in the flow rate which occurs between the forward and backward sides in the rotation direction of the blade and which influences high-frequency components of noise. Thus, noise can be reduced.

Embodiment 7

Hereinafter, a centrifugal fan according to embodiment 7 will be described.

In embodiment 7, considering the fact that high-frequency components are generated by blades having a narrow interval in a centrifugal fan having blades with unequal intervals, the outer-circumferential-side shapes of the two blades having the smallest interval is prescribed by the following Expression (4).

$$(4 \times (\theta2/\theta1 - 1)) + (R2/R1 - 1)$$

$$+ (H2/H1 - 1) + 0.2 \times LOG10(S2/S1)$$

$$< (P1/(360° /Z) - 1) \quad ... \quad (4)$$

If the angle P1 formed by the two blades having the smallest interval, the exit angles Θ1, Θ2 thereof, the warp radii S1, S2 thereof, the outer radii R1, R2 thereof, and the blade heights H1, H2 thereof are set so as to satisfy the above Expression (4), it is possible to further reduce high-frequency components of noise while maintaining the flow amount of the centrifugal fan 1 without reduction thereof, more effectively than in embodiment 5. That is, it becomes possible to effectively suppress sharp change in the flow rate occurring between the forward and backward sides of the blade 4_2, and an area of the blade 4_2 where a great-disturbance flow caused by the blade 4_1 collides can be reduced. Thus, it is possible to effectively reduce high-frequency components of noise while maintaining the flow amount of the centrifugal fan 1.

In embodiment 7, the outer-circumferential-side shapes of the two blades having the smallest interval are prescribed by Expression (4). Further, it is desirable that the outer-circumferential-side shape of the blade 4_2 positioned on the backward side, of the two blades having the smallest interval, satisfies a relationship similar to the above Expression (4), also for the other blades, as well as the prescription by Expression (4) for the blade 4_1 positioned on the forward side. That is, it is desirable to satisfy the following Expression (5).

$$(4 \times (\theta2/\theta m - 1)) + (R2/Rm - 1)$$

$$+ (H2/Hm - 1) + 0.2 \times LOG10(S2/Sm)$$

$$< (Pm/(360° /Z) - 1) \quad ... \quad (5)$$

Here, m is 1, 3, ..., Z.

For example,

if m = 1,
Θm = Θ1, Rm = R1, Hm = H1, Sm = S1, and Pm = P1,
if m = 3,
θm = θ3, Rm = R3, Hm = H3, Sm = S3, and Pm = P3, and
if m = Z,
θm =θZ, Rm = RZ, Hm = HZ, Sm = SZ, and Pm = PZ.

By making such setting, it becomes possible to effectively suppress sharp change in the flow rate occurring between the forward and backward sides of the blade 4 2, and an area of the blade 4_2 where a great-disturbance flow caused by the blade 4_1 collides can be reduced. Thus, it is possible to effectively reduce high-frequency components of noise.

Embodiment 8

Hereinafter, a centrifugal fan according to embodiment 8 will be described.

In the above embodiment 7, considering the fact that high-frequency components are generated by blades having a narrow interval in a centrifugal fan having blades with unequal intervals, the outer-circumferential-side shape of, in particular, the backward-side blade 4_2 of the two blades having the smallest interval has been prescribed. In embodiment 8, for such blades that the circumferential-direction interval therebetween is smaller than the average value of the blade intervals, i.e., the angle formed by a blade 4 N and a blade 4_(N + 1) with respect to the rotation center O satisfies PN < (360°/Z), the following Expression (6) may be satisfied.

```
(4×(θ(N + 1)/θN − 1)) + (R(N + 1)/RN − 1)

+ (H(N + 1)/HN −1)

+ 0.2×LOG10(S(N + 1)/SN)

            < (PN/(360°/Z) − 1)   ... (6)
```

Here, N is 1, 2, 3, ..., Z, and a natural number that returns to 1 when exceeding Z.

For example,

if N = 1,
ΘN = Θ1, RN = R1, HN = H1, SN = S1, PN = P1, Θ(N + 1) = θ2, R(N + 1) = R2, HN + 1 = H2, and SN + 1 = S2,
if N = 2,
ΘN = Θ2, RN = R2, HN = H2, SN = S2, PN = P2, Θ(N + 1) = Θ3, R(N + 1) = R3, H(N + 1) = H3, and S(N + 1) = S3, and
if N = Z,
θN = θZ, RN = RZ, HN = HZ, SN = SZ, PN = PZ, θ(N + 1) = θ1, R(N + 1) = R1, H(N + 1) = H1, and S(N + 1) = S1.

Making the setting so as to satisfy the above Expression (6) provides an effect of, while suppressing reduction in the flow amount of the centrifugal fan, significantly effectively reducing high-frequency components of nz noise higher than the number of blades of the centrifugal fan. Further, for such blades that the circumferential-direction interval therebetween is smaller than the average value of the blade intervals, it becomes possible to effectively suppress sharp change in the flow rate which occurs between the forward and backward sides in the rotation direction of the blade and which influences the high-frequency components of noise. In addition, for the blades having the interval smaller than the average value of the blade intervals, an area of the backward-side blade where a great-disturbance flow caused by the forward-side blade collides can be reduced. Thus, while the flow amount of the centrifugal fan is maintained, high-frequency components of noise can be efficiently reduced.

Embodiment 9

The centrifugal fans according to any of the above embodiments 1 to 8 may be used by being mounted to a rotor of a rotary electric machine such as an AC electric generator, a motor, or a drive device. Embodiment 9 shows an example in which the centrifugal fan is mounted to a vehicle AC electric generator.

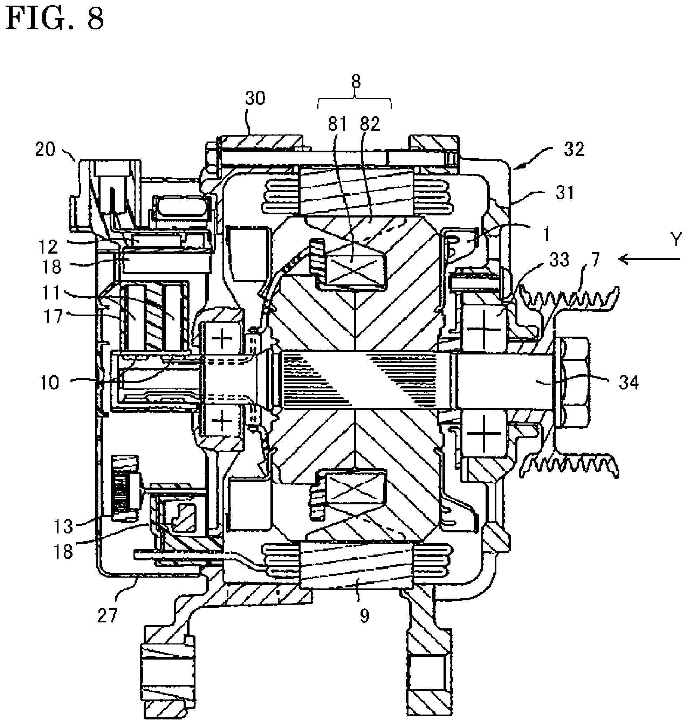

FIG. 8 is a sectional view schematically showing a vehicle AC electric generator to which the centrifugal fan 1 disclosed in any of the above embodiments 1 to 8 is applied. In FIG. 8, the vehicle AC electric generator includes: a casing 32 composed of a front-side housing 31 and a rear-side housing 30 having substantially bowl shapes and made of aluminum; a shaft 34 rotatably supported by the casing 32 via a pair of bearings 33; a pulley 7 fixed to an end of the shaft 34 extending on the front side of the casing 32; a rotor 8 which rotates integrally with the shaft 34 and is provided in the casing 32; a stator 9 provided so as to be opposed to the outer circumference of the rotor 8, and fixed to the casing 32; a pair of slip rings 10 which are fixed to an extending portion of the shaft 34 extending on the rear side of the casing 32 and supply current to the rotor 8; a pair of brushes 11 sliding on the surfaces of the respective slip rings 10; a brush holder 17 storing these brushes 11; a voltage adjuster 12 which is adjacent to the brushes 11 and adjusts the magnitude of AC voltage generated at the stator 9; a rectifier 13 rectifying the AC voltage generated at the stator 9 to DC voltage; a heat sink 18; a connector 20 through which signals are inputted/outputted between the voltage adjuster 12 and an external device (not shown); and a protection cover 27 covering the brush holder 17 and the rectifier 13.

The rotor 8 is a Lundell-type rotor including a field winding 81 which is formed by cylindrically and concentrically winding a copper wire having undergone insulation treatment and generates a magnetic flux when exciting current flows therethrough, and a field core 82 in which magnetic poles are formed by the generated magnetic flux, and which is provided so as to surround the field winding 81 and has, on both sides, claw portions whose number is 6, 8, 10, or a greater value that is an integer multiple of 2.

The centrifugal fan 1 is provided such that the shaft 34 is inserted through the hole at the center part of the main plate 2 of the centrifugal fan 1, and is attached to the rotor 8 by welding or the like. The centrifugal fan 1 has the features described in the above embodiments 1 to 8, and sucks the outside air into the vehicle AC electric generator in a Y direction in the drawing through rotation of the rotor 8, and discharges the air that has cooled components in the vehicle AC electric generator. In detail, the rotor 8 is provided with a flow passage for cooling the field winding 81, and a fluid flows in the axial direction as the rotor 8 and the centrifugal fan 1 rotate, thereby cooling the field winding 81. By providing the centrifugal fan 1 having the features described in the above embodiments to the rotor, cooling performance is improved.

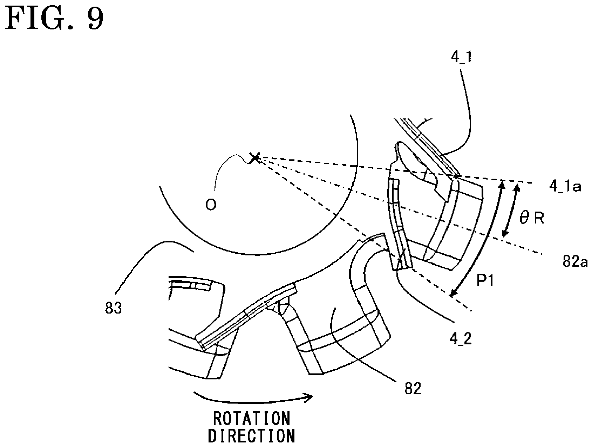

FIG. 9 shows a partial structure of the rotor 8 and the centrifugal fan 1 as seen in the rotation-axis direction (Y direction in FIG. 8). The centrifugal fan 1 is attached on the front side of the rotor 8 (Y direction in FIG. 8). One of the claw portions of the field core 82 is positioned between the two blades 4_1 and 4_2 having the angle P1 which is the smallest angle formed by the outermost circumferential ends of two adjacent blades with respect to the rotation center O as seen in the rotation-axis direction, and is arranged so as to protrude toward the outer circumferential side from the two blades 4_1 and 4_2. Here, a half line formed by the rotation center O and the outermost radius of the blade positioned on the rotation-direction side of P1 as seen in the rotation-axis direction is denoted by 4_1a, a half line formed by the rotation center O and the substantial center of the claw portion of the field core 82 as seen in the rotation-axis direction is denoted by 82a, and an angle by which the half line 4_1a advances in the rotation direction from the half line 82a about the rotation center O is denoted by $\theta R$. Then, setting is made so as to satisfy the following Expression (7).

$$P1/2 - 10° < \theta R < P1/2 + 10° \quad \dots \quad (7)$$

Thus, flow sound caused by the field core 82 and the centrifugal fan 1 can be effectively reduced. Expression (7) means that the center of the claw portion is positioned approximately in a range of $\pm 10°$ with respect to the rotation center from the midpoint between the two blades having the smallest interval among the pairs of adjacent blades. By making such setting, it becomes possible to effectively suppress sharp change in the flow rate caused by the field core 82. By setting the claw portions of the field core 82 or the angle P1 of the centrifugal fan 1 as shown by Expression (7), the effects described in embodiments 1 to 8 are obtained, i.e., while the flow amount of the centrifugal fan 1 is maintained, high-frequency components of noise are reduced, and in addition, noise caused by the field core 82 can also be reduced.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the embodiments may be selected and combined with the constituent components mentioned in another embodiment. However, an embodiment is only according to the invention if it is according to claim 1 because the invention and corresponding scope of protection is solely defined by the claims.

DESCRIPTION OF THE REFERENCE CHARACTERS

1     centrifugal fan
2     main plate
3     arm-shaped plate
4     blade
5     cooling hole
7     pulley
8     rotor
9     stator
10    slip ring
11    brush
12    voltage adjuster
13    rectifier
17    brush holder
18    heat sink
20    connector
27    protection cover
30    rear-side housing
31    front-side housing
32    casing
33    bearing
34    shaft
81    field winding
82    field core


**Claims**

1. A centrifugal fan (1) comprising:

   a main plate (2) having a rotation center (O); and
   a plurality of blades (4) extending from the main plate (2) in a direction of a rotation axis passing the rotation center (O), wherein
   the plurality of blades (4) include, at least partially, an arrangement in which intervals between the adjacent blades (4) are unequal intervals,
   a length direction of each blade (4) extends from an inner circumferential side to an outer circumferential side of the main plate (2), and
   in a pair of the blades (4_1, 4_2) adjacent to each other with a smallest interval in a rotation direction among the plurality of blades (4), the blade (4_2) positioned on a backward side in the rotation direction and the blade (4_1) positioned on a forward side in the rotation direction are different in outer-circumferential-side shapes, and an action of discharging a fluid toward the outer circumferential side by the blade (4_2) positioned on the backward side in the rotation direction is made smaller as compared to the blade (4_1) positioned on the forward side in the rotation direction, **characterized in that**
   in the pair of blades (4_1, 4_2) adjacent to each other with the smallest interval in the rotation direction among the plurality of blades (4),
   each blade of the pair of blades (4_1, 4_2) has a first part (Fin) extending from an inner circumferential side toward an outer circumferential side of the blade and formed in a concave shape with respect to the rotation direction, and a second part (Fout) extending from the first part (Fin) toward an outer circumferential side and formed in a convex shape with respect to the rotation direction, and
   a warp radius (S2) of the second part (Fout) of the blade (4_2) positioned on the backward side in the rotation direction is smaller than a warp radius (S1) of the second part (Fout) of the blade (4_1) positioned on the forward side in the rotation direction.

2. The centrifugal fan (1) according to claim 1, wherein
   the warp radius (S2) of the second part (Fout) of the blade (4_2) positioned on the backward side in the rotation direction, of the pair of blades (4_1, 4_2) adjacent to each other with the smallest interval in the rotation direction, is smallest among the plurality of blades (4).

3. The centrifugal fan (1) according to any one of claims 1 to 2, wherein
   in the pair of blades (4_1, 4_2) adjacent to each other with the smallest interval in the rotation direction among the plurality of blades (4), an exit angle ($\theta$2) of the blade (4_2) positioned on the backward side in the rotation direction is smaller than an exit angle ($\theta$1) of the blade (4_1) positioned on the forward side in the rotation direction, an exit angle being defined as an angle formed by a tangent line extended from the outer circumferential end along the inclination of each blade (4_1, 4_2) in the vicinity of the outer circumferential end.

4. The centrifugal fan (1) according to claim 3, wherein
   the exit angle ($\theta$2) of the blade (4_2) positioned on the backward side in the rotation direction, of the pair of blades (4_1, 4_2) adjacent to each other with the smallest interval in the rotation direction, is smallest among the plurality of blades (4).

5. The centrifugal fan (1) according to any one of claims 1 to 4, wherein
   in the pair of blades (4_1, 4_2) adjacent to each other with the smallest interval in the rotation direction among the plurality of blades (4), an outer radius (R2) of the blade (4_2) positioned on the backward side in the rotation direction is smaller than an outer radius (R1) of the blade (4_1) positioned on the forward side in the rotation direction.

6. The centrifugal fan (1) according to claim 5, wherein
   the outer radius (R2) of the blade (4_2) positioned on the backward side in the rotation direction, of the pair of blades (4_1, 4_2) adjacent to each other with the smallest interval in the rotation direction, is smallest among the plurality of blades (4).

7. The centrifugal fan (1) according to any one of claims 1 to 6, wherein
   in the pair of blades (4_1, 4_2) adjacent to each other with the smallest interval in the rotation direction among the plurality of blades (4), a height (H2) of the blade (4_2) positioned on the backward side in the rotation direction is smaller than a height (H1) of the blade (4_1) positioned on the forward side in the rotation direction.

8. The centrifugal fan (1) according to claim 7, wherein
   the height (H2) of the blade (4_2) positioned on the backward side in the rotation direction, of the pair of blades (4_1, 4_2) adjacent to each other with the smallest interval in the rotation direction, is smallest among the plurality of blades (4).

9. The centrifugal fan (1) according to claim 1, wherein
   where

   a number of the plurality of blades (4) is denoted by Z, and
   in the pair of blades (4_1, 4_2) adjacent to each other with the smallest interval in the rotation direction,
   the warp radius of the second part (Fout) of the blade (4_2) positioned on the backward side in the rotation direction is denoted by S2 and an exit angle thereof is denoted by $\Theta$2,
   the warp radius of the second part (Fout) of the blade (4_1) positioned on the forward side in the rotation direction is denoted by S1 and an exit angle thereof is denoted by $\Theta$1, and
   an angle formed by outermost circumferential ends of the blades (4_1, 4_2) positioned on the forward side and the backward side in the rotation direction with respect to the rotation center (O) is denoted by P1,
   the following expression is satisfied:

   ```
   (4×(θ2/θ1 - 1)) + 0.2×LOG10(S2/S1)
   ```

   ```
   < (P1/(360°/Z) - 1).
   ```

10. The centrifugal fan (1) according to claim 1, wherein
    where

    a number of the plurality of blades (4) is denoted by Z, and
    in the pair of blades (4_1, 4_2) adjacent to each other with the smallest interval in the rotation direction,

the warp radius of the second part (Fout) of the blade (4_2) positioned on the backward side in the rotation direction is denoted by S2, an exit angle thereof is denoted by Θ2, an outer radius of the blade (4_2) is denoted by R2, and a height of the blade (4_2) is denoted by H2,

the warp radius of the second part (Fout) of the blade (4_1) positioned on the forward side in the rotation direction is denoted by S1, an exit angle thereof is denoted by Θ1, an outer radius of the blade (4_1) is denoted by R1, and a height of the blade (4_1) is denoted by H1, and

an angle formed by outermost circumferential ends of the blades (4_1, 4_2) positioned on the forward side and the backward side in the rotation direction with respect to the rotation center (O) is denoted by P1,

the following expression is satisfied:

```
(4×(θ2/θ1 - 1)) + (R2/R1 - 1) + (H2/H1 - 1) + 0.2×LOG10(S2/S1) < (P1/(360°/Z) - 1).
```

11. The centrifugal fan (1) according to claim 1, wherein
where

a number of the plurality of blades (4) is denoted by Z,

for prescribing a shape of each blade (4), the warp radius of the second part (Fout) of the blade (4) is denoted by Sm, an exit angle thereof is denoted by θm, an outer radius of the blade (4) is denoted by Rm, a height of the blade (4) is denoted by Hm, and an angle formed by outermost circumferential ends of the blade (4) positioned on the backward side in the rotation direction and any other blade (4) with respect to the rotation center is denoted by Pm, and

in the pair of blades (4) adjacent to each other with the smallest interval in the rotation direction, the blade (4) positioned on the forward side in the rotation direction is defined as a first blade(4_1) at m = 1, the warp radius of the second part (Fout) of the blade (4_1) positioned on the forward side in the rotation direction is denoted by S1, an exit angle thereof is denoted by Θ1, an outer radius of the blade (4_1) is denoted by R1, a height of the blade (4_1) is denoted by H1, and an angle formed by the outermost circumferential ends of the blades (4_1, 4_2) positioned on the forward side and the backward side in the rotation direction with respect to the rotation center (O) is denoted by P1,

the shapes of the blades (4) are prescribed up to a Zth blade sequentially in a direction opposite to the rotation direction, so as to satisfy the following expression:

```
(4×(θ2/θm - 1)) + (R2/Rm - 1) + (H2/Hm - 1) + 0.2×LOG10(S2/Sm) < (Pm/(360°/Z) - 1),
```

m being a natural number of 1, 3, ..., Z.

12. A rotary electric machine comprising:

the centrifugal fan (1) according to any one of claims 1 to 11; and
a rotor with the centrifugal fan (1) attached to a front side of the rotor (8).

13. The rotary electric machine according to claim 12, wherein

the rotor (8) includes a field winding (81), and a field core (82) provided so as to cover the field winding (81) and having a plurality of claw portions, and
in the pair of blades (4_1, 4_2) adjacent to each other with the smallest interval in the rotation direction among the plurality of blades (4) of the centrifugal fan (1),

where an angle formed by outermost circumferential ends of the blades (4_1, 4_2) positioned on the forward side and the backward side in the rotation direction with respect to the rotation center (O) is denoted by P1, one of the plurality of claw portions is positioned between the pair of blades (4_1, 4_2) adjacent to each other with the smallest interval in the rotation direction, and

where an angle formed by a half line connecting the rotation center (O) and an outer circumferential end of the blade (4_1) positioned on the forward side in the rotation direction, and a half line connecting the rotation center (O) and a center of the claw portion, is denoted by θR, the following expression is satisfied:

$$P1/2 - 10° < θR < P1/2 + 10°.$$

**Patentansprüche**

1. Zentrifugalgebläse (1), das Folgendes aufweist:

    eine Hauptplatte (2) mit einem Drehmittelpunkt (O); und
    eine Vielzahl von Schaufeln (4), die sich von der Hauptplatte (2) in einer Richtung einer Drehachse erstrecken, die den Drehmittelpunkt (O) passiert, wobei
    die Vielzahl von Schaufeln (4) zumindest teilweise eine Anordnung aufweist, bei der die Abstände zwischen den benachbarten Schaufeln (4) ungleiche Abstände sind,
    eine Längsrichtung jeder Schaufel (4) sich von einer inneren Umfangsseite zu einer äußeren Umfangsseite der Hauptplatte (2) erstreckt, und
    in einem Paar der Schaufeln (4_1, 4_2), die unter der Vielzahl von Schaufeln (4) mit einem kleinsten Abstand in einer Drehrichtung aneinander angrenzen, die Schaufel (4_2), die auf einer in der Drehrichtung hinteren Seite angeordnet ist, und die Schaufel (4_1), die auf einer in der Drehrichtung vorderen Seite angeordnet ist, in der Form der Außenumfangsseite unterschiedlich sind, und eine Wirkung des Ablassens eines Fluids in Richtung der äußeren Umfangsseite durch die Schaufel (4_2), die auf der in der Drehrichtung hinteren Seite angeordnet ist, im Vergleich zu der Schaufel (4_1), die auf der in der Drehrichtung vorderen Seite angeordnet ist, geringer gemacht ist, **dadurch gekennzeichnet, dass**
    in dem Paar von Schaufeln (4_1, 4_2), die unter der Vielzahl von Schaufeln (4) mit dem kleinsten Abstand in der Drehrichtung aneinander angrenzen,

        jede Schaufel des Paares von Schaufeln (4_1, 4_2) einen ersten Teil (Fin), der sich von einer inneren Umfangsseite zu einer äußeren Umfangsseite der Schaufel erstreckt und in einer konkaven Form in Bezug auf die Drehrichtung ausgebildet ist, und einen zweiten Teil (Fout) aufweist, der sich von dem ersten Teil (Fin) zu einer äußeren Umfangsseite erstreckt und in einer konvexen Form in Bezug auf die Drehrichtung ausgebildet ist, und
        ein Wölbungsradius (S2) des zweiten Teils (Fout) der Schaufel (4_2), die auf der in Drehrichtung hinteren Seite angeordnet ist, kleiner ist als ein Wölbungsradius (S1) des zweiten Teils (Fout) der Schaufel (4_1), die auf der in Drehrichtung vorderen Seite angeordnet ist.

2. Zentrifugalgebläse (1) nach Anspruch 1, wobei
    der Wölbungsradius (S2) des zweiten Teils (Fout) der Schaufel (4_2), die auf der in Drehrichtung hinteren Seite angeordnet ist, des Paares von Schaufeln (4_1, 4_2), die mit dem kleinsten Abstand in Drehrichtung aneinander angrenzen, unter der Vielzahl von Schaufeln (4) am kleinsten ist.

3. Zentrifugalgebläse (1) nach einem der Ansprüche 1 bis 2, wobei
    bei dem Paar von Schaufeln (4_1, 4_2), die unter der Vielzahl von Schaufeln (4) mit dem kleinsten Abstand in Drehrichtung aneinander angrenzen, ein Austrittswinkel (θ2) der Schaufel (4_2), die auf der in Drehrichtung hinteren Seite angeordnet ist, kleiner ist als ein Austrittswinkel (θ1) der Schaufel (4_1), die auf der in Drehrichtung vorderen Seite angeordnet ist, wobei ein Austrittswinkel als ein Winkel definiert ist, der durch eine Tangente ausgebildet wird, die sich von dem äußeren Umfangsende entlang der Neigung jeder Schaufel (4_1, 4_2) in der Umgebung des äußeren Umfangsendes erstreckt.

4. Zentrifugalgebläse (1) nach Anspruch 3, wobei
    der Austrittswinkel (θ2) der Schaufel (4_2), die auf der in Drehrichtung hinteren Seite angeordnet ist, des Paares von Schaufeln (4_1, 4_2), die mit dem kleinsten Abstand in Drehrichtung aneinander angrenzen, unter der Vielzahl von Schaufeln (4) am kleinsten ist.

5. Zentrifugalgebläse (1) nach einem der Ansprüche 1 bis 4, wobei
bei dem Paar von Schaufeln (4_1, 4_2), die unter der Vielzahl von Schaufeln (4) mit dem kleinsten Abstand in Drehrichtung aneinander angrenzen, ein Außenradius (R2) der Schaufel (4_2), die auf der in Drehrichtung hinteren Seite angeordnet ist, kleiner ist als ein Außenradius (R1) der Schaufel (4_1), die auf der in Drehrichtung vorderen Seite angeordnet ist.

6. Zentrifugalgebläse (1) nach Anspruch 5, wobei
der Außenradius (R2) der Schaufel (4_2), die auf der in Drehrichtung hinteren Seite angeordnet ist, des Paares von Schaufeln (4_1, 4_2), die mit dem kleinsten Abstand in Drehrichtung aneinander angrenzen, unter der Vielzahl von Schaufeln (4) am kleinsten ist.

7. Zentrifugalgebläse (1) nach einem der Ansprüche 1 bis 6, wobei
bei dem Paar von Schaufeln (4_1, 4_2), die unter der Vielzahl von Schaufeln (4) mit dem kleinsten Abstand in Drehrichtung aneinander angrenzen, eine Höhe (H2) der Schaufel (4_2), die auf der in Drehrichtung hinteren Seite angeordnet ist, kleiner ist als eine Höhe (H1) der Schaufel (4_1), die auf der in Drehrichtung vorderen Seite angeordnet ist.

8. Zentrifugalgebläse (1) nach Anspruch 7, wobei
die Höhe (H2) der Schaufel (4_2), die auf der in Drehrichtung hinteren Seite angeordnet ist, des Paares von Schaufeln (4_1, 4_2), die mit dem kleinsten Abstand in Drehrichtung aneinander angrenzen, unter der Vielzahl von Schaufeln (4) am kleinsten ist.

9. Zentrifugalgebläse (1) nach Anspruch 1, wobei wenn

eine Anzahl der Vielzahl von Schaufeln (4) mit Z bezeichnet wird, und
in dem Paar von Schaufeln (4_1, 4_2), die mit dem kleinsten Abstand in Drehrichtung aneinander angrenzen,

der Wölbungsradius des zweiten Teils (Fout) der Schaufel (4_2), die auf der in Drehrichtung hinteren Seite angeordnet ist, mit S2 bezeichnet wird und ein Austrittswinkel davon mit θ2 bezeichnet wird,
der Wölbungsradius des zweiten Teils (Fout) der Schaufel (4_1), die auf der in Drehrichtung vorderen Seite angeordnet ist, mit S1 bezeichnet wird und ein Austrittswinkel davon mit θ1 bezeichnet wird, und
ein Winkel, der durch die äußersten Umfangsenden der Schaufeln (4_1, 4_2), die in Drehrichtung auf der vorderen Seite und der hinteren Seite angeordnet sind, in Bezug auf den Drehmittelpunkt (O) ausgebildet wird, mit P1 bezeichnet wird,

der folgende Ausdruck erfüllt ist:

$$(4 \times (\theta2/\theta1 - 1)) + 0,2 \times LOG10(S2/S1) < (P1/(360°/Z) - 1).$$

10. Zentrifugalgebläse (1) nach Anspruch 1, wobei wenn

eine Anzahl der Vielzahl von Schaufeln (4) mit Z bezeichnet wird, und
in dem Paar von Schaufeln (4_1, 4_2), die mit dem kleinsten Abstand in Drehrichtung aneinander angrenzen,

der Wölbungsradius des zweiten Teils (Fout) der Schaufel (4_2), die auf der in Drehrichtung hinteren Seite angeordnet ist, mit S2 bezeichnet wird, ein Austrittswinkel davon mit θ2 bezeichnet wird, ein Außenradius der Schaufel (4_2) mit R2 bezeichnet wird, und eine Höhe der Schaufel (4_2) mit H2 bezeichnet wird,
der Wölbungsradius des zweiten Teils (Fout) der Schaufel (4_1), die auf der in Drehrichtung vorderen Seite angeordnet ist, mit S1 bezeichnet wird, ein Austrittswinkel davon mit θ1 bezeichnet wird, ein Außenradius der Schaufel (4_1) mit R1 bezeichnet wird, und eine Höhe der Schaufel (4_1) mit H1 bezeichnet wird, und
ein Winkel, der durch die äußersten Umfangsenden der Schaufeln (4_1, 4_2), die auf der in Drehrichtung vorderen Seite und der hinteren Seite angeordnet sind, in Bezug auf den Drehmittelpunkt (O) ausgebildet wird, mit P1 bezeichnet wird,

der folgende Ausdruck erfüllt ist:

$$(4 \times (\theta2/\theta1 - 1)) + (R2/R1 - 1) + (H2/H1 - 1) + 0{,}2 \times LOG10\ (S2/S1) < (P1/(360°/Z) - 1).$$

11. Zentrifugalgebläse (1) nach Anspruch 1, wobei wenn

eine Anzahl der Vielzahl von Schaufeln (4) mit Z bezeichnet wird,
zum Vorschreiben einer Form jeder Schaufel (4) der Wölbungsradius des zweiten Teils (Fout) der Schaufel (4) mit Sm bezeichnet wird, ein Austrittswinkel davon mit θm bezeichnet wird, ein Außenradius der Schaufel (4) mit Rm bezeichnet wird, eine Höhe der Schaufel (4) mit Hm bezeichnet wird und ein Winkel, der durch die äußersten Umfangsenden der Schaufel (4), die auf der in Drehrichtung hinteren Seite angeordnet ist, und jeder anderen Schaufel (4) in Bezug auf den Drehmittelpunkt ausgebildet wird, mit Pm bezeichnet wird, und
in dem Paar von Schaufeln (4), die mit dem kleinsten Abstand in Drehrichtung aneinander angrenzen, die Schaufel (4), die auf der in Drehrichtung vorderen Seite angeordnet ist, als eine erste Schaufel (4_1) bei m = 1 definiert ist, der Wölbungsradius des zweiten Teils (Fout) der Schaufel (4_1), die auf der in Drehrichtung vorderen Seite angeordnet ist, mit S1 bezeichnet wird, ein Austrittswinkel davon mit θ1 bezeichnet wird, ein Außenradius der Schaufel (4_1) mit R1 bezeichnet wird, eine Höhe der Schaufel (4_1) mit H1 bezeichnet wird und ein Winkel, der durch die äußersten Umfangsenden der Schaufeln (4_1, 4_2), die auf der in Drehrichtung vorderen Seite und der hinteren Seite angeordnet sind, in Bezug auf den Drehmittelpunkt (O) ausgebildet wird, mit P1 bezeichnet wird,
sind die Formen der Schaufeln (4) bis zu einer Z-ten Schaufel aufeinanderfolgend in einer der Drehrichtung entgegengesetzten Richtung so vorgeschrieben, dass sie den folgenden Ausdruck erfüllen:

$$(4 \times (\theta2/\theta m - 1)) + (R2/Rm - 1) + (H2/Hm - 1) + 0{,}2 \times LOG10\ (S2/Sm) < (Pm/(360°/Z) - 1),$$

wobei m eine natürliche Zahl von 1, 3, ..., Z ist.

12. Rotierende elektrische Maschine, die Folgendes aufweist:

das Zentrifugalgebläse (1) nach einem der Ansprüche 1 bis 11; und
einen Rotor, wobei das Zentrifugalgebläse (1) an einer Vorderseite des Rotors (8) befestigt ist.

13. Rotierende elektrische Maschine nach Anspruch 12, wobei

der Rotor (8) eine Feldwicklung (81) und einen Feldkern (82) aufweist, der so vorgesehen ist, dass er die Feldwicklung (81) abdeckt und eine Vielzahl von Klauenabschnitten aufweist, und
in dem Paar von Schaufeln (4_1, 4_2), die unter der Vielzahl von Schaufeln (4) des Zentrifugalgebläses (1) mit dem kleinsten Abstand in der Drehrichtung aneinander angrenzen,

wenn ein Winkel, der durch die äußersten Umfangsenden der Schaufeln (4_1, 4_2), die auf der in Drehrichtung vorderen Seite und der hinteren Seite angeordnet sind, in Bezug auf den Drehmittelpunkt (O) ausgebildet wird, mit P1 bezeichnet wird, einer der Vielzahl von Klauenabschnitten zwischen dem Paar von Schaufeln (4_1, 4_2) angeordnet ist, die in Drehrichtung mit dem kleinsten Abstand aneinander angrenzen, und
wenn ein Winkel, der durch eine Halblinie, die den Drehmittelpunkt (O) und ein äußeres Umfangsende der Schaufel (4_1), die auf der in Drehrichtung vorderen Seite angeordnet ist, verbindet, und eine Halblinie, die den Drehmittelpunkt (O) und eine Mitte des Klauenabschnitts verbindet, gebildet wird, mit θR bezeichnet wird, der folgende Ausdruck erfüllt ist:

$$P1/2 - 10° < \theta R < P1/2 + 10°.$$

**Revendications**

1. Ventilateur centrifuge (1) comprenant :

   une plaque principale (2) présentant un centre de rotation (O) ; et
   une pluralité de pales (4) s'étendant depuis la plaque principale (2) dans une direction d'un axe de rotation passant par le centre de rotation (O), dans lequel
   la pluralité de pales (4) incluent, au moins en partie, un agencement dans lequel des intervalles entre les pales (4) adjacentes sont des intervalles inégaux,
   une direction de longueur de chaque pale (4) s'étend depuis un côté circonférentiel interne vers un côté circonférentiel externe de la plaque principale (2), et
   dans une paire des pales (4_1, 4_2) adjacentes l'une à l'autre avec un intervalle le plus petit dans une direction de rotation parmi la pluralité de pales (4), la pale (4_2) positionnée sur un côté arrière dans la direction de rotation et la pale (4_1) positionnée sur un côté avant dans la direction de rotation sont différentes en termes de formes côté circonférentiel externe, et une action d'évacuation d'un fluide vers le côté circonférentiel externe par la pale (4_2) positionnée sur le côté arrière dans la direction de rotation est plus petite par rapport à la pale (4_1) positionnée sur le côté avant dans la direction de rotation,
   **caractérisé en ce que**
   dans la paire de pales (4_1, 4_2) adjacentes l'une à l'autre avec l'intervalle le plus petit dans la direction de rotation parmi la pluralité de pales (4), chaque pale de la paire de pales (4_1, 4_2) présente une première partie (Fin) s'étendant depuis un côté circonférentiel interne vers un côté circonférentiel externe de la pale et formée selon une forme concave par rapport à la direction de rotation, et une seconde partie (Fout) s'étendant depuis la première partie (Fin) vers un côté circonférentiel externe et formée selon une forme convexe par rapport à la direction de rotation, et
   un rayon de déformation (S2) de la seconde partie (Fout) de la pale (4_2) positionnée sur le côté arrière dans la direction de rotation est plus petit qu'un rayon de courbure (S1) de la seconde partie (Fout) de la pale (4_1) positionnée sur le côté avant dans la direction de rotation.

2. Ventilateur centrifuge (1) selon la revendication 1, dans lequel
   le rayon de déformation (S2) de la seconde partie (Fout) de la pale (4_2) positionnée sur le côté arrière dans la direction de rotation, de la paire de pales (4_1, 4_2) adjacentes l'une à l'autre avec le plus petit intervalle dans la direction de rotation, est le plus petit parmi la pluralité de pales (4).

3. Ventilateur centrifuge (1) selon l'une quelconque des revendications 1 à 2, dans lequel
   dans la paire de pales (4_1, 4_2) adjacentes l'une à l'autre avec l'intervalle le plus petit dans la direction de rotation parmi la pluralité de pales (4), un angle de sortie ($\theta2$) de la pale (4_2) positionnée sur le côté arrière dans la direction de rotation est plus petit qu'un angle de sortie ($\theta1$) de la pale (4_1) positionnée sur le côté avant dans la direction de rotation, un angle de sortie étant défini comme un angle formé par une ligne tangente étendue depuis l'extrémité circonférentielle externe le long de l'inclinaison de chaque pale (4_1, 4_2) à proximité de l'extrémité circonférentielle externe.

4. Ventilateur centrifuge (1) selon la revendication 3, dans lequel
   l'angle de sortie ($\theta2$) de la pale (4_2) positionnée sur le côté arrière dans la direction de rotation, de la paire de pales (4_1, 4_2) adjacentes l'une à l'autre avec le plus petit intervalle dans la direction de rotation, est le plus petit parmi la pluralité de pales (4).

5. Ventilateur centrifuge (1) selon l'une quelconque des revendications 1 à 4, dans lequel
   dans la paire de pales (4_1, 4_2) adjacentes l'une à l'autre avec l'intervalle le plus petit dans la direction de rotation parmi la pluralité de pales (4), un rayon externe (R2) de la pale (4_2) positionnée sur le côté arrière dans la direction de rotation est plus petit qu'un rayon de sortie (R1) de la pale (4_1) positionnée sur le côté avant dans la direction de rotation.

6. Ventilateur centrifuge (1) selon la revendication 5, dans lequel
   le rayon externe (R2) de la pale (4_2) positionnée sur le côté arrière dans la direction de rotation, de la paire de pales (4_1, 4_2) adjacentes l'une à l'autre avec le plus petit intervalle dans la direction de rotation, est le plus petit parmi la pluralité de pales (4).

7. Ventilateur centrifuge (1) selon l'une quelconque des revendications 1 à 6, dans lequel

dans la paire de pales (4_1, 4_2) adjacentes l'une à l'autre avec l'intervalle le plus petit dans la direction de rotation parmi la pluralité de pales (4), une hauteur (H2) de la pale (4_2) positionnée sur le côté arrière dans la direction de rotation est plus petite qu'une hauteur (H1) de la pale (4_1) positionnée sur le côté avant dans la direction de rotation.

8. Ventilateur centrifuge (1) selon la revendication 7, dans lequel
la hauteur (H2) de la pale (4_2) positionnée sur le côté arrière dans la direction de rotation, de la paire de pales (4_1,4_2) adjacentes l'une à l'autre avec le plus petit intervalle dans la direction de rotation, est la plus petite parmi la pluralité de pales (4).

9. Ventilateur centrifuge (1) selon la revendication 1, dans lequel
où

un nombre de la pluralité de pales (4) est désigné par Z, et
dans la paire de pales (4_1, 4_2) adjacentes l'une à l'autre avec le plus petit intervalle dans la direction de rotation,
le rayon de déformation de la seconde partie (Fout) de la pale (4_2) positionnée sur le côté arrière dans la direction de rotation est désigné par S2 et un angle de sortie de celle-ci est désigné par $\theta2$,
le rayon de déformation de la seconde partie (Fout) de la pale (4_1) positionnée sur le côté avant dans la direction de rotation est désigné par S1 et un angle de sortie de celle-ci est désigné par $\theta1$, et
un angle formé par des extrémités circonférentielles les plus externes des pales (4_1, 4_2) positionnées sur le côté avant et le côté arrière dans la direction de rotation par rapport au centre de rotation (O) est désigné par P1, l'expression suivante est satisfaite :

$$(4\times(\theta2/\theta1 - 1)) + 0,2\times LOG10 (S2/S1) < (P1/(360°/Z) - 1).$$

10. Ventilateur centrifuge (1) selon la revendication 1, dans lequel
où

un nombre de la pluralité de pales (4) est désigné par Z, et
dans la paire de pales (4_1, 4_2) adjacentes l'une à l'autre avec le plus petit intervalle dans la direction de rotation,

le rayon de déformation de la seconde partie (Fout) de la pale (4_2) positionnée sur le côté arrière dans la direction de rotation est désigné par S2, un angle de sortie de celle-ci est désigné par $\theta2$, un rayon externe de la pale (4_2) est désigné par R2 et une hauteur de la pale (4_2) est désignée par H2,
le rayon de déformation de la seconde partie (Fout) de la pale (4_1) positionnée sur le côté avant dans la direction de rotation est désigné par S1, un angle de sortie de celle-ci est désigné par $\theta1$, un rayon externe de la pale (4_1) est désigné par R1 et une hauteur de la pale (4_1) est désignée par H1, et
un angle formé par des extrémités circonférentielles les plus externes des pales (4_1, 4_2) positionnées sur le côté avant et le côté arrière dans la direction de rotation par rapport au centre de rotation (O) est désigné par P1,

l'expression suivante est satisfaite :

$$(4\times(\theta2/\theta1 - 1)) + (R2/R1 - 1)$$
$$+ (H2/H1 - 1) + 0,2\times LOG10(S2/S1)$$
$$< (P1/(360°/Z) - 1).$$

11. Ventilateur centrifuge (1) selon la revendication 1, dans lequel
où

un nombre de la pluralité de pales (4) est désigné par Z,
pour prescrire une forme de chaque pale (4),
le rayon de déformation de la seconde partie (Fout) de la pale (4) est désigné par Sm, un angle de sortie de celle-ci est désigné par $\theta m$, un rayon externe de la pale (4) est désigné par Rm, une hauteur de la pale (4) est désignée par Hm, et un angle formé par des extrémités circonférentielles les plus externes de la pale (4) positionnée sur le côté arrière dans la direction de rotation et toute autre pale (4) par rapport au centre de rotation est désigné par Pm, et

dans la paire de pales (4) adjacentes l'une à l'autre avec l'intervalle le plus petit dans la direction de rotation, la pale (4) positionnée sur le côté avant dans la direction de rotation est définie comme première pale (4_1) à m = 1, le rayon de déformation de la seconde partie (Fout) de la pale (4_1) positionnée sur le côté avant dans la direction de rotation est désigné par S1, un angle de sortie de celle-ci est désigné par θ1, un rayon externe de la pale (4_1) est désigné par R1, une hauteur de la pale (4_1) est désignée par H1 et un angle formé par les extrémités circonférentielles les plus externes de la pale (4_1, 4_2) positionnées sur le côté avant et le côté arrière dans la direction de rotation par rapport au centre de rotation (O) est désigné par P1,

les formes des pales (4) sont prescrites jusqu'à une Z-ème pale séquentiellement dans une direction opposée à la direction de rotation, de manière à satisfaire à l'expression suivante :

$$(4 \times (\theta2/\theta m - 1)) + (R2/Rm - 1)$$

$$+ (H2/Hm - 1) + 0{,}2 \times LOG10(S2/Sm)$$

$$< (Pm/(360°/Z) - 1),$$

m étant un nombre naturel de 1, 3, ..., Z.

12. Machine électrique rotative comprenant :

le ventilateur centrifuge (1) selon l'une quelconque des revendications 1 à 11 ; et
un rotor pourvu du ventilateur centrifuge (1) fixé à un côté avant du rotor (8).

13. Machine électrique rotative selon la revendication 12, dans laquelle

le rotor (8) inclut un enroulement de champ (81), et un noyau de champ (82) prévu de manière à recouvrir l'enroulement de champ (81) et présentant une pluralité de parties de griffes, et
dans la paire de pales (4_1, 4_2) adjacentes l'une à l'autre avec le plus petit intervalle dans la direction de rotation parmi la pluralité de pales (4) du ventilateur centrifuge (1),

où un angle formé par des extrémités circonférentielles les plus externes des pales (4_1, 4_2) positionnées sur le côté avant et le côté arrière dans la direction de rotation par rapport au centre de rotation (O) est désigné par P1, l'une de la pluralité de parties de griffes est positionnée entre la paire de pales (4_1, 4_2) adjacentes l'une à l'autre avec le plus petit intervalle dans la direction de rotation, et
où un angle formé par une demi-ligne reliant le centre de rotation (O) et une extrémité circonférentielle externe de la pale (4_1) positionnée sur le côté avant dans la direction de rotation, et une demi-ligne reliant le centre de rotation (O) et un centre de la partie de griffe, est désigné par θR, l'expression suivante est satisfaite :

$$P1/2 - 10° < \theta R < P1/2 + 10°.$$

# FIG. 1

# FIG. 2

ROTATION
DIRECTION

# FIG. 3

# FIG. 4

# FIG. 5

FIG. 6

FIG. 7

## FIG. 8

FIG. 9

ROTATION
DIRECTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006077631 A
- FR 2850805 A1
- US 5028826 A
- US 2018252237 A1
- US 2015303765 A1
- US 2014127029 A1